# EUROPÄISCHE PATENTSCHRIFT

(11) **EP 4 627 295 B1**
(45) Veröffentlichungstag und Bekanntmachung des Hinweises auf die Patenterteilung: **23.09.2026**
(21) Anmeldenummer: 23801717.2
(22) Anmeldetag: 03.11.2023
(51) Int. Cl.: G01F 1/32, G01F 1/325, G01D 5/24, G01D 11/24, G01F 23/263

(54) **KAPAZITIVE SENSORBAUGRUPPE FÜR EIN FELDGERÄT UND FELDGERÄT**
CAPACITIVE SENSOR ASSEMBLY FOR A FIELD DEVICE, AND FIELD DEVICE
ENSEMBLE CAPTEUR CAPACITIF POUR UN APPAREIL DE TERRAIN ET APPAREIL DE TERRAIN

(30) Priorität: 30.11.2022 DE 102022131694
(43) Veröffentlichungstag der Anmeldung: 08.10.2025
(73) Patentinhaber: Endress+Hauser Flowtec AG, 4153 Reinach (CH)
(72) Erfinder: HÖCKER, Rainer, 79761 Waldshut (DE); RIEGER, Anton, 79737 Herrischried (DE)
(74) Vertreter: Endress + Hauser Group Services (Deutschland) AG+Co. KG
(86) Internationale Anmeldenummer: PCT/EP2023/080670
(87) Internationale Veröffentlichungsnummer: WO 2024/115039

(56) Entgegenhaltungen:
- EP-A1- 0 841 545
- WO-A1-95/16186
- DE-A1- 102013 013 476
- JP-A- S57 186 115
- US-A1- 2017 343 407

## Beschreibung

Die Erfindung betrifft eine kapazitive Sensorbaugruppe für ein Feldgerät der Automatisierungstechnik sowie ein Feldgerät der Automatisierungstechnik.

Als Feldgeräte werden im Rahmen dieser Anmeldung im Prinzip alle Messgeräte zur Bestimmung und/oder Überwachung von Prozessgrößen bezeichnet, die prozessnah eingesetzt werden und prozessrelevante Informationen liefern oder verarbeiten. Dabei handelt es sich beispielsweise um Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessgrößen Füllstand, Durchfluss, Druck, Temperatur, pH-Wert bzw. Leitfähigkeit eines Prozessmediums erfassen. Derartige Feldgeräte werden von der Endress+Hauser in den unterschiedlichsten Ausgestaltungen hergestellt und vertrieben.

Kapazitive Sensorbaugruppen werden bspw. in kapazitiven Füllstandsmessgeräten, in Druckmessgeräten und in Vortex-Durchflussmessgeräten eingesetzt.

Letztere dienen bspw. zur Messung von Strömungsgeschwindigkeiten von in Rohrleitungen strömenden Fluiden, insb. schnellströmenden und/oder heißen Gasen (>100°C) und/oder Fluidströmen von hoher Reynoldszahl (Re>10000), bzw. von mit einer jeweiligen Strömungsgeschwindigkeit korrespondierenden Volumen- oder Massen Durchflussraten. Beispiele für derartige Vortex-Durchflussmessgeräte sind u.a. aus der US 47 16 770 A, der US 60 03 384 A, der US 69 10 387 B2, der US 69 38 496 B2, der US 97 19 819 B2, der US 1 08 45 222 B2 oder der US 1 09 48 321 B2 bekannt und werden u.a. auch von der Anmelderin selbst angeboten, beispielsweise unter der Warenbezeichnung "PROWIRL D 200", "PROWIRL F 200", "PROWIRL O 200", "PROWIRL R 200".

Weitere relevante Anmeldungen für derartige kapazitive Sensorbaugruppen bzw. Vortex-Durchflussmessgeräten sind die WO 95/161 86 A1, die EP 0 841 545 A1, die DE 10 2013 013 476 A1 die JP S57 186 115 A und die US 2017/343 407 A1

Derartige Vortex-Durchflussmessgeräte weisen einen vom Fluid angeströmten Staukörper auf, der dem Erzeugen von zu einer sogenannten *Kärmänschen* Wirbelstraße aufgereihten Wirbeln innerhalb eines unmittelbar stromabwärts des Staukörpers strömenden Teilvolumens des Fluids dient. Die Wirbel werden dabei bekanntlich mit einer von der Strömungsgeschwindigkeit abhängigen Ablöserate (1/fᵥₜₓ) am Staukörper generiert. Ferner weisen die Vortex-Durchflussmessgeräte einen in den Staukörper integrierten bzw. mit diesem verbundenen oder stromabwärts desselben, nämlich im Bereich der Kármánschen Wirbelstraße in die Strömung eingesetzten, (Wirbel-)Sensor auf. Der Sensor dient dazu, Druckschwankungen in der im strömenden Fluid ausgebildeten Kármánschen Wirbelstraße zu erfassen und in ein die Druckschwankungen repräsentierendes, insb. kapazitives, Messsignal zu wandeln. Das Messignal korrespondiert mit einem innerhalb des Fluids herrschenden, infolge gegenläufiger Wirbel stromab des Staukörpers periodischen Schwankungen unterworfenen Druck, bzw. weist eine mit der Ablöserate der Wirbel korrespondierende Signalfrequenz (~ fᵥₜₓ) auf.

Der Sensor weist dafür eine dünnen Verformungskörper aus Metall (Messmembran) sowie einer sich ausgehend von einer im wesentlichen planaren Oberfläche des Verformungskörpers erstreckenden zumeist stabförmigen, plattenförmigen, keilförmigen oder paddelförmigen Sensorfahne (sogenanntes "Paddel") gebildete (mechanische) Sensorbaugruppe auf. Die mechanische Sensorbaugruppe ist dafür eingerichtet, Druckschwankungen in der Kármánschen Wirbelstraße zu erfassen und in mit den Druckschwankungen korrespondierende Bewegungen des Verformungskörpers zu wandeln.

Zwecks des Generierens des Messsignals umfasst der Sensor unmittelbar auf der vorbezeichneten, der die Sensorfahne tragende Oberfläche abgewandten Oberfläche des Verformungskörpers und/oder in deren Nähe positioniertes Wandelerelement. Das Wandelerelement ist mittels einer mit dem jeweiligen Verformungskörper mechanisch gekoppelten Kondensatoreinheit mit veränderlicher Messkapazität gebildet und dafür eingerichtet, Bewegungen des Verformungskörpers bzw. des ggf. vorhandenen Ausgleichskörpers zu erfassen, nämlich über eine entsprechende Änderung der Messkapazität der Kondensatoreinheit, so dass mit einer derartigen kapazitiven Sensorbaugruppe das Messsignal erzeugbar ist.

Im Stand der Technik verwendete Kondensatoreinheiten basierend auf einzuglasenden Elektroden weisen zum einen den Nachteil der geringen Robustheit auf und sind zum anderen aufwendig zu fertigen. Dies bspw. auch, da das Dielektrikum zwischen den Elektroden oftmals evakuiert und/oder mit Schutzgas gefüllt wird.

Der Erfindung liegt daher die Aufgabe zugrunde, eine möglichst einfach herstellbare und robuste kapazitive Sensorbaugruppe für ein Feldgerät der Automatisierungstechnik anzugeben.

Die Aufgabe wird gelöst durch eine kapazitive Sensorbaugruppe für ein Feldgerät der Automatisierungstechnik sowie ein Feldgerät der Automatisierungstechnik.

Bezüglich der Sensorbaugruppe wird die Aufgabe gelöst durch eine kapazitive Sensorbaugruppe für ein Feldgerät der Automatisierungstechnik, welche Sensorbaugruppe umfasst:
ein erstes Gehäuseelement und ein zweites Gehäuseelement; und
einen Schaltungsträger;
wobei das zweite Gehäuseelement das erste Gehäuseelement zumindest abschnittsweise räumlich derart umgibt, dass ein Spalt zwischen einer Innenwandung des zweiten Gehäuseelements und einer Außenwandung des ersten Gehäuseelements vorliegt,
wobei die Innenwandung des zweiten Gehäuseelements und/oder die Außenwandung des ersten Gehäuseelements elektrisch leitend, insbesondere metallisch, ist; und
wobei der Schaltungsträger zumindest einen in den Spalt hineinragenden Spaltabschnitt mit einer Schaltungsanordnung aufweist,
wobei die Schaltungsanordnung zumindest ein elektrisch leitendes Leiterelement mit einer das Leiterelement abdeckenden elektrisch isolierenden Schicht aufweist,
wobei der Spaltabschnitt derart in den Spalt hineinragt, dass eine erste Oberfläche des Spaltabschnitts der Außenwandung des ersten Gehäuseelements und eine zweite Oberfläche des Spaltabschnitts der Innenwandung des zweiten Gehäuseelements zugewandt ist,
wobei insbesondere die zweite Oberfläche des Spaltabschnitts der ersten Oberfläche des Spaltabschnitts gegenüberliegt;
wobei der Spaltabschnitt zumindest auf derjenigen der ersten Oberfläche und der zweiten Oberfläche, welche einer elektrisch leitenden Wandung, nämlich der Innenwandung des zweiten Gehäuseelements und/oder der Außenwandung des ersten Gehäuseelements zugewandt ist, die elektrisch isolierende Schicht aufweist,
so dass zumindest eine erste Elektrode einer Kondensatoreinheit gebildet ist durch das zumindest eine elektrisch leitende Leiterelement der Schaltungsanordnung des Spaltabschnitts,
dass eine oder mehrere zweite Elektrode/n der Kondensatoreinheit gebildet sind durch die dem Spaltabschnitt zugewandte/n elektrisch leitende/n Wandung/en, nämlich die Innenwandung des zweiten Gehäuseelements und/oder die Außenwandung des ersten Gehäuseelements, und
dass das Dielektrikum der Kondensatoreinheit gebildet ist durch das in dem Spalt eingenommene Volumen zwischen dem Spaltabschnitt und der dem Spaltabschnitt zugewandte/n elektrisch leitende/n Wandung, nämlich der Innenwandung des zweiten Gehäuseelements und/oder der Außenwandung des ersten Gehäuseelements, sowie durch einen elektrisch isolierenden Anteil des Spaltabschnitts.

Insbesondere ist der Spaltabschnitt an die Form des ersten Gehäuseelements und des zweiten Gehäuseelements angepasst. Der Schaltungsträger ist also insbesondere zumindest abschnittsweise formbar, insb. flexibel, oder in seiner Form anpassbar (auch: in seiner Form frei gestaltbar).

Die Vorteile der Erfindung sind die folgenden:
- Die Kondensatoreinheit ist sehr einfach gebildet ist, nämlich durch zumindest eine elektrisch leitende Wandung und einen in den Spalt zwischen die beiden Gehäuseelemente angeordneten Schaltungsträger.
- Die die Leiterelemente isolierenden Schichten des Schaltungsträgers stellen direkt die Isolation zwischen den jeweils leitenden Wandungen der Gehäuseelemente und den Leiterelementen bereit. Die beiden Gehäuseelemente sind damit zumindest nicht über die Leiterelemente direkt miteinander elektrisch verbunden. Sie können aber anderweitig miteinander elektrisch verbunden sein, bspw. indem sie Teil einer gemeinsamen konstruktiven Einheit sind.
- Ein im Stand der Technik verwendetes Einglasen von Elektroden einer Kondensatoreinheit ist nicht mehr vonnöten. Dadurch wird zum einen eine deutliche Kostenreduktion in der Fertigung erreicht. Zum anderen ist, auch bei einer Überlastung des Verformungskörpers und/oder bei starker asymmetrischer Verformung kein Kurzschluss möglich. Dies auch, wenn leitfähige Flüssigkeiten und/oder, leitende Partikel wie bspw. Metallspäne in den Spalt eindringen.
- Weder ist eine Evakuierung des Spalts und/oder ein Einfüllen eines Schutzgases in den Spalt zur Sicherstellung der ausreichenden Isolierung auch bei Überlast notwendig.
- Der Schaltungsträger ist von außerhalb des Spalts darin einsetzbar, insb. einschiebbar. Er kann dadurch sehr einfach eingesetzt werden und insbesondere auch prozessnah ausgetauscht werden.
- Die Verwendung des in den Spalt eingebrachten Schaltungsträgers ermöglicht eine direkte Integration und/oder sehr einfache Anbindung von einer Anschlussleitungen, welche der Weiterleitung des mit der Kondensatoreinheit erzeugten, kapazitiven Messsignals dient. Diese können direkt in den Schaltungsträger integriert sein bzw. an die Leiterelemente des Spaltabschnitts angeschlossen sein, zur Erfassung und Weiterleitung der als Messsignal dienenden Kapazität(en) der Kondensatoreinheit.

In einer Ausgestaltung der Sensorbaugruppe sind sowohl die Innenwandung des zweiten Gehäuseelements als auch die Außenwandung des ersten Gehäuseelements elektrisch leitend, insbesondere metallisch, wobei insbesondere sowohl das erstes Gehäuseelement als auch das zweite Gehäuseelement elektrisch leitend, insbesondere metallisch, sind.

In diesem Fall weist die kapazitive Sensorbaugruppe also eine Kondensatoreinheit mit zwei Kondensatoren auf - nämlich mit Elektroden, die gebildet sind durch die beiden leitenden Wandungen, sprich die Außenwandungen und die Innenwandung, sowie die Leiterelemente. Hierdurch verdoppelt sich die Sensitivität der Kondensatoreinheit, bspw. für den Fall der eingangs genannten Vortex-Durchflussmessgeräte im Vergleich zu deren klassischen Design.

In einer Ausgestaltung der Sensorbaugruppe sind das erste Gehäuseelement und das zweite Gehäuseelement zumindest abschnittsweise zylinderförmig und der Spaltabschnitt ist gekrümmt, insbesondere mit einer Krümmung, die an die Kontur des zylinderförmigen Abschnitts des ersten Gehäuseelements und des zweiten Gehäuseelements angepasst ist. Der zumindest abschnittsweise formbare oder in der Form angepasste Schaltungsträger ist für den Fall zumindest abschnittsweise zylinderförmiger Gehäuseelemente, bei denen der Spaltabschnitt den zylinderförmigen Abschnitten der Gehäuseelemente gegenüberliegt, im in den Spalt eingesetzten Zustand also derart gekrümmt, dass der Spaltabschnitt uneben ist und die Krümmung des zylinderförmigen Abschnitts nachvollzieht.

Insbesondere sind die Gehäuseelemente konzentrisch. In dem Fall ist der Spalt insbesondere kreisringförmig. Insb. handelt es sich um einen Rundspalt.

In einer bevorzugten Ausgestaltung der Sensorbaugruppe handelt es sich bei dem Schaltungsträger um eine zumindest abschnittsweise flexible Leiterplatte,
wobei zumindest der Spaltabschnitt als zumindest ein flexibler Leiterplattenabschnitt ausgebildet ist.

Vollständig flexible oder nur abschnittsweise flexible Leiterplatten und deren Einsatz als Schaltungsträger sind aus dem Stand der Technik an sich bekannt, wobei letztere auch semi-flexible oder Semiflex-Leiterplatten bezeichnet werden. Durch die Ausbildung des Spaltabschnitt als flexibler Leiterplattenabschnitt kann dieser sehr einfach an die Form der beiden Gehäuseelemente angepasst werden. Der Spaltabschnitt ist bspw. für den vorstehend genannten Fall des abschnittsweise kreisringförmigen Spalts oder Rundspalts derart gebogen, dass er im Wesentlichen die Krümmung des abschnittsweise kreisringförmigen Spalts nachvollzieht.

In einer Ausgestaltung der Sensorbaugruppe umfasst der Spaltabschnitt einen ersten flexiblen Leiterplattenabschnitt und einen zweiten flexiblen Leiterplattenabschnitt, wobei der erste flexible Leiterplattenabschnitt und der zweite flexible Leiterplattenabschnitt an unterschiedlichen Bereichen des Spalts angeordnet sind.

Bevorzugt sind die beiden flexiblen Leiterplattenabschnitte an unterschiedlichen, insb. sich gegenüberliegenden, Bereichen des insb. kreisringförmigen Spalts angeordnet. Hierzu ist bspw. der erste flexible Leiterplattenabschnitt mit dem zweiten flexiblen Leiterplattenabschnitt mittels eines flexibles Verbindungsabschnitts verbunden, welcher flexible Verbindungsabschnitt aus dem Spalt herausragt.

In einer Ausgestaltung der Sensorbaugruppe handelt es sich bei dem Schaltungsträger um einen anhand eines Verfahren zur Herstellung von dreidimensionalen Spritzgussschaltungsträgern hergestellten Schaltungsträger.

Bei einem derartigen Schaltungsträger handelt es sich um ein spritzgegossenes Kunststoffteil (englisch: Molded Interconnect Device, kurz MID), in welches eine metallische Struktur eingebracht wird, welche hier als das zumindest eine Leiterelement bzw. als die zumindest eine erste Elektrode der Kondensatoreinheit dient. Es herrschen nahezu keine Einschränkungen an die geometrische Form des Kunststoffteils und die räumliche Anordnung der metallischen Struktur innerhalb des Kunststoffteils. Eine Übersicht über die gängigen Herstellungsverfahren von MIDs wird beispielsweise von der "Forschungsvereinigung Räumliche Elektronische Baugruppen 3-D MID e.V." herausgegeben. Ähnlich wie für die vorstehend genannte Variante der flexiblen Leiterplatte ist für den Fall eines Schaltungsträgers, der als MID gebildet ist, der Vorteil in der quasi vollständig freien geometrischen Gestaltung des Schaltungsträgers zu sehen, so dass die Form des Schaltungsträgers optimal an die Form der Gehäuseelemente bzw. an die des Spalts anpassbar ist.

In einer Ausgestaltung der Sensorbaugruppe ist der Spaltabschnitt mit dem ersten Gehäuseelement und dem zweiten Gehäuseelement mechanisch, insbesondere kraftschlüssig, bevorzugt ausschließlich kraftschlüssig, verbunden, indem der Spaltabschnitt zwischen das erste Gehäuseelement und das zweite Gehäuseelement in den Spalt eingeklemmt ist.

Vorteilhaft sind insb. zur Verbindung der Gehäuseelemente mit dem Schaltungsträger keine zusätzlichen Verbindungselemente und/oder zusätzlichen Prozessschritte (Kleben, Vergießen, etc. vonnöten). Der Spalt ist also insb. frei von einem zusätzlichen Verguss, Kleber, oder einem sonstigen in der AVT gebräuchlichen Verbindungsmittel zur mechanischen Verbindung von Schaltungsträger und Gehäuseelement, bspw. mechanische Steckverbindungen wie Nieten zur zusätzlichen formschlüssigen Verbindung. Dadurch ist der Schaltungsträger besonders einfach auswechselbar, durch Herausziehen des auszuwechselnden Schaltungsträgers und Einklemmen eines neuen Schaltungsträgers.

Ferner weist die Sensorbaugruppe durch das Einklemmen eine hohe Vibrationsbeständigkeit auch. Dies auch für einen nachstehend genannten Anschlussabschnitt, welcher sich an den Spaltabschnitt anschließt und aus dem Spalt herausragt.

Bspw. ist der Spaltabschnitt frei von elektronischen Bauelementen und die Schaltungsanordnung weist, insbesondere im Wesentlichen ausschließlich, Leiterbahnen als das/die Leiterelement/e auf.

Bspw. weist der Spalt eine Spaltbreite kleiner als 2mm auf, wobei die Spaltbreite insbesondere zwischen 0,1 und 0,5 mm beträgt. Als Spaltbreite ist insbesondere ein maximaler Abstand zwischen der Außenwandung des ersten Gehäuseelements und der Innenwandung des zweiten Gehäuseelements definiert.

Bspw. weist die elektrisch isolierende Schicht des Spaltabschnitts Polyimid auf, und ist insbesondere als eine elektrisch isolierende Folie aus einem Polyimid ausgebildet.

Polyimid zeichnet sich durch eine ausgesprochen hohe Temperaturbeständigkeit, insb. bei Temperaturen bis über ca. 300°C, und eine hohe mechanische Stabilität aus.

Derartige Folien aus Polyimid werden bspw. unter den folgenden Handelsnamen bzw. von den folgenden Herstellern vertrieben:
APICAL^{®} - Kaneka Americas Holding Inc.
KAPTON^{®} oder VESPEL^{®} - DuPont
KINEL^{®} - Vyncolit N.V.
MELDIN^{®} - Saint Gobain
P 84^{®} - Evonik Industries
UPILEX^{®} - Ube Industries Ltd.

In einer Ausgestaltung der Sensorbaugruppe handelt es sich bei dem Schaltungsträger um eine semi-flexible oder voll-flexible Leiterplatte, wobei der Schaltungsträger einen sich an den Spaltabschnitt anschließenden Anschlussabschnitt aufweist, welcher Anschlussabschnitt aus dem Spalt herausragt,
und wobei die zumindest eine elektrisch isolierende Schicht der Schaltungsanordnung des Spaltabschnitts und das zumindest eine Leiterelement der Schaltungsanordnung des Spaltabschnitts in dem Anschlussabschnitt fortgesetzt sind.

In einer Ausgestaltung der Sensorbaugruppe weist die semi-flexible oder voll-flexible Leiterplatte in dem Anschlussabschnitt ein Abschirmelement auf, welches Abschirmelement der Abschirmung von elektromagnetischen Störfeldern dient,
wobei das Abschirmelement umfasst:
   - Eine elektrisch leitende Leitflächenschicht, welche Leitflächenschicht die elektrisch isolierende Schicht, insb. vollflächig, abdeckt;
   - Eine elektrisch isolierende Isolierschicht, welche Isolierschicht die Leitflächenschicht, insb. vollflächig, abdeckt,
und wobei die Leitflächenschicht/en und die Isolierschicht/en als Schichten der semi-flexiblen oder voll-flexiblen Leiterplatte ausgebildet sind.

Bevorzugt sind die Isolierschichten ähnlich wie die vorstehend eingeführten elektrisch isolierenden Schichten ausgebildet, weisen insbesondere auch Polyimid auf.

In einer Ausgestaltung der Sensorbaugruppe handelt es sich bei dem Schaltungsträger um eine, insb. vollständig, flexible Leiterplatte, wobei auf dem Anschlussabschnitt ein Anschlusselement, insb. ein Steckverbinderelement, angeordnet ist,
und wobei insbesondere das Anschlusselement mittels einer elektrischen Durchführung mit einer starren Leiterplatte elektrisch kontaktierbar ist.

In einer Ausgestaltung der Sensorbaugruppe handelt es sich bei dem Schaltungsträger um eine semiflexible Leiterplatte, wobei die semiflexible Leiterplatte einen starren Abschnitt umfasst, und wobei der starre Abschnitt den Anschlussabschnitt umfasst und/oder wobei der starre Abschnitt sich an den Anschlussabschnitt anschließt.

Vorteilhaft sind auf dem starren Abschnitt oder der starren Leiterplatte weitere Bauelemente anordenbar, bspw. ein Vibrationssensor, insb. ein Beschleunigungssensor, oder ein Temperatursensor.

Bspw., ist der Spalt als ein Luftspalt ausgebildet. Dies ist eine fertigungstechnisch besonders einfache Variante, bei der der Spalt weder evakuiert noch mit Schutzgasen befüllt werden muss.

Bezüglich des Feldgeräts wird die Aufgabe gelöst durch ein Feldgerät der Automatisierungstechnik zur Erfassung einer Prozessgröße eines Mediums, wobei das Feldgerät eine erfindungsgemäße kapazitive Sensorbaugruppe aufweist.

In einer Ausgestaltung des Feldgeräts dient die Kondensatoreinheit als Signalerzeugungseinheit des Feldgeräts, zur Erzeugung zumindest eines von einer Prozessgröße abhängigen kapazitiven Messsignals, und das Feldgerät weist eine an die Signalerzeugungseinheit angeschlossene Messelektronik auf, welche der Verarbeitung und/oder Weiterleitung eines von der Signalerzeugungseinheit erzeugten kapazitiven Messsignals dient.

In einer Ausgestaltung des Feldgeräts umfasst das Feldgerät eine starre Leiterplatte, welche starre Leiterplatte mit dem Anschlusselement mittels einer elektrischen Durchführung elektrisch kontaktiert ist, und wobei die starre Leiterplatte Teil der Messelektronik ist.

In einer Ausgestaltung des Feldgeräts ist der starre Abschnitt der semi-flexiblen Leiterplatte Teil der Messelektronik. Bspw. umfasst das Feldgerät einen medienberührenden Abschnitt, wobei die Messelektronik mit einem Abstand von zumindest 50 mm zu dem medienberührenden Abschnitt beabstandet ist.

Bspw. handelt es sich bei dem Medium um ein strömendes Fluid, wobei die Sensorbaugruppe als ein Sensorelement zum kapazitiven Erfassen von Druckschwankungen einer in dem strömenden Fluid ausgebildeten Kármánschen Wirbelstraße dient.

Die Erfindung umfasst ferner das Verwenden eines erfindungsgemäßen Feldgeräts, zum Erfassen eines Strömungsparameters, insb. einer Strömungsgeschwindigkeit und/oder einer Volumen- und/oder Massendurchflussrate, eines in einer Rohrleitung strömenden Fluids mit einer Fluidtemperatur von mehr als 400°C und/oder mit einem Druck von mehr als 250 bar, insb. einem Dampf.

Die Erfindung wird anhand der nachfolgenden, nicht maßstabsgetreuen Figuren näher erläutert, wobei gleiche Bezugszeichen gleiche Merkmale bezeichnen. Wenn es die Übersichtlichkeit erfordert oder es anderweitig sinnvoll erscheint, wird auf bereits erwähnte Bezugszeichen in nachfolgenden Figuren verzichtet.

Es zeigen:
Fig. 1a, 1b: Verschiedene Ansichten auf eine Ausgestaltung einer erfindungsgemäßen kapazitiven Sensorbaugruppe 100;
Fig. 2a,2b: Verschiedene Ansichten auf eine Ausgestaltung einer erfindungsgemäßen kapazitiven Sensorbaugruppe 100 im Zusammenhang mit einer Feldgerätekomponente;
Fig. 3: Eine Ansicht einer Ausgestaltung eines Feldgeräts 200 mit einer erfindungsgemäßen Sensorbaugruppe 100 und;
Fig. 4: Eine Ansicht einer Ausgestaltung eines Feldgeräts 200 mit einer erfindungsgemäßen Sensorbaugruppe 100 mit einem Abschirmelement.

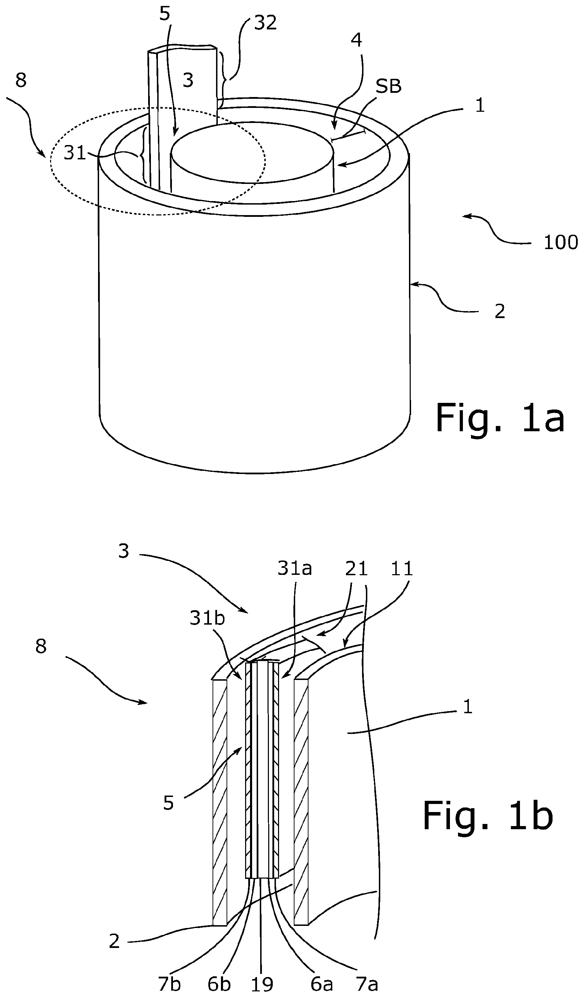

Fig. 1a zeigt eine perspektivische Ansicht eines Ausschnitts einer Sensorbaugruppe 100 gemäß der Erfindung. Ein metallisches zylinderförmiges erstes Gehäuseelement 1 wird von einem zweiten metallischen Gehäuseelement 2 derart umgeben, dass ein Spalt 4 mit einer Spaltbreite SB zwischen den beiden Gehäuseelementen 1, 2 vorliegt. Die Spaltbreite SB beträgt zwischen 0,1 und 0,5 mm.

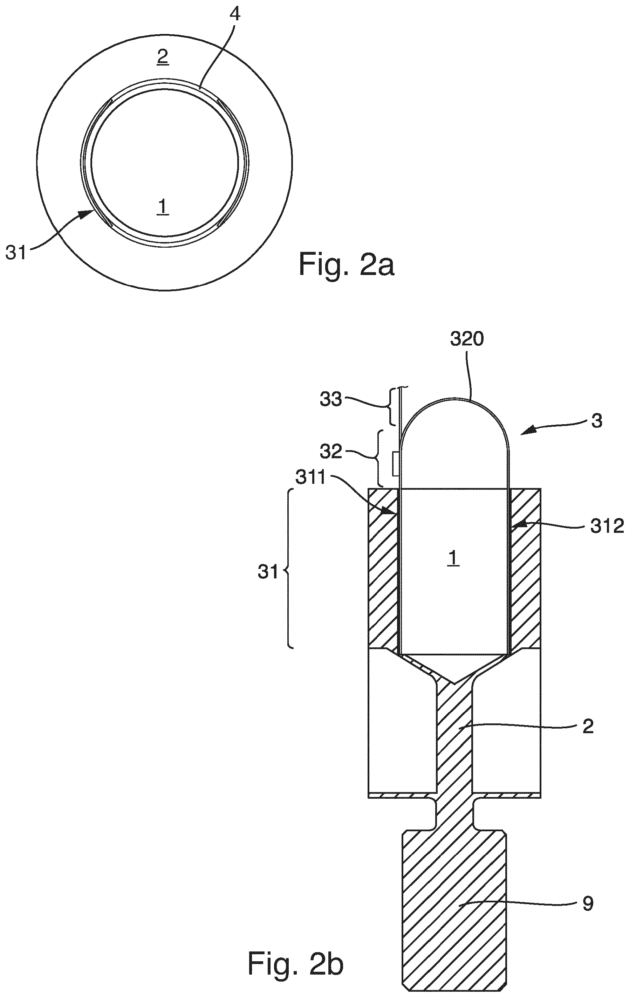

In diesem Ausführungsbeispiel sind der Übersichtlichkeit halber beide Gehäuseelemente 1, 2 metallisch und damit elektrisch leitend, dies ist für die Erfindung aber selbstverständlich nicht wesentlich: es ist ausreichend, dass zumindest die Innenwandung 21 des zweiten Gehäuseelements 2 oder die Außenwandung 11 des ersten Gehäuseelements 1 elektrisch leitend ist. Der Schaltungsträger 3 ist derart in Bezug auf die Gehäuseelemente 1, 2 angeordnet, dass er mit einem Spaltabschnitt 31 in den Spalt 4 hineinragt. Der Schaltungsträger 3 weist auch einen außerhalb des Spalts 4 liegenden, sich an den Spaltabschnitt 31 anschließenden Anschlussabschnitt 32 (vgl. auch Fig. 2 bis 3) auf. In dem Spaltabschnitt 31 weist der Schaltungsträger 3 eine Schaltungsanordnung 5 auf, mit zumindest einem Leiterelement 6a; 6b. Dadurch bildet der Spaltabschnitt 31 in Kombination mit den Gehäuseelementen 1, 2 eine Kondensatoreinheit 8.

Dies ist in dem Fig. 1b dargestellt, welche das in dem gestrichelten, eingekreisten Bereich aus Fig. 1a gezeigte Detail näher zeigt. Der Anschlussabschnitt 32 ist hier der Übersichtlichkeit halber nicht dargestellt. Die Schaltungsanordnung 5 des Schaltungsträgers 3 umfasst ein zentrales Trägerelement 19, auf dem beidseitig Leiterelement 6a, 6b angeordnet sind, welche jeweils durch eine elektrisch isolierende Schicht 7a, 7b abgedeckt sind. Auch das Trägerelement 19 ist nicht wesentlich für die Erfindung, solange der Schaltungsträger 3 ausreichend stabil ist, ist es auch durchaus möglich nur ein oder mehrere zentrale/s Leiterelement/e 6a; 6b vorzusehen, welche/s beidseitig durch elektrisch isolierenden Schichten 7a, 7b abgedeckt und somit zwischen diesen eingekapselt ist/sind.

Die Außenwandung 11 des ersten Gehäuseelements 1 liegt der ersten Oberfläche 31a des Spaltabschnitt 31 gegenüber und ist aufgrund der elektrisch isolierenden Schicht 7a und dem freien Volumen in dem Spalt 4 gegenüber dem ersten Leiterelement 6a isoliert. Somit bilden das Leiterelement 6a eine erste Elektrode der Kondensatoreinheit 8 und die Außenwandung 11 eine zweite Elektrode der Kondensatoreinheit 8. Die Innenwandung 21 des zweiten Gehäuseelements 2 liegt der zweiten Oberfläche 31b des Spaltabschnitt 31 gegenüber und ist aufgrund der elektrisch isolierenden Schicht 7b und dem freien Volumen in dem Spalt 4 gegenüber dem zweiten Leiterelement 6b isoliert. Somit bildet das zweite Leiterelement 6b eine weitere erste Elektrode der Kondensatoreinheit 8, und die Innenwandung 21 des zweites Gehäuseelement 21 bildet eine weitere zweite Elektrode der Kondensatoreinheit 8.

Die Gehäuseelemente 1, 2 sind gegeneinander beweglich gelagert. Bei einer Relativbewegung der Gehäuseelemente 1, 2 und des Schaltungsträgers 3 gegeneinander ändert sich der Abstand zwischen den Elektroden der Kondensatoreinheit 8 und damit die als Messsignal MS dienende Kapazität der Kondensatoreinheit 8. Aufgrund der Verwendung zweier elektrisch leitender Wandungen 11, 21 sind mit der Kondensatoreinheit 8 zwei kapazitive Messsignale MS erfassbar.

Fig. 2a zeigt eine Aufsicht von oben auf eine weitere Ausgestaltung der kapazitiven Sensorbaugruppe 100. Das zweite Gehäuseelement 2 umgibt das innenliegende erste Gehäuseelement 1 in dieser Ausgestaltung im Wesentlichen vollständig. Der Spaltabschnitt 31 des Schaltungsträger 3 ist als eine gebogene, flexible Leiterplatte ausgebildet, wobei die Biegung der flexiblen Leiterplatte 31 an die Form des Rundspalts 4 angepasst ist. Die flexible Leiterplatte zeichnet sich durch eine hohe Stabilität bei gleichzeitiger Formbarkeit aus. Wenngleich die Ausführungsbeispiele hier und im Folgenden im Zusammenhang mit flexiblen Leiterplatten erläutert sind, umfasst die erfindungsgemäße Lösung sämtliche weitere formbare oder in ihrer Form anpassbare, (auch: in ihrer Form frei gestaltbare) Schaltungsträger 3, wie bspw. die vorstehend genannten spritzgegossenen Schaltungsträger oder MIDs.

Die flexible Leiterplatte 31 ist in den Spalt 4 von oben derart eingeklemmt, so dass eine kraftschlüssige Verbindung zwischen dem Schaltungsträger 3 und den Gehäuseelementen 1, 2 vorliegt. Dadurch ist der Schaltungsträger 3 sehr einfach in den Spalt 4 einsetzbar bzw. in einem Fehlerfall auch prozessnah ohne Weiteres auswechselbar.

In der in Fig. 2 gezeigten Ausgestaltung umfasst der Spaltabschnitt 31 einen ersten Spaltabschnitt 311 und einen diesem gegenüberliegenden zweiten Spaltabschnitt 312. Die beiden Spaltabschnitte 311, 312 sind an unterschiedlichen Bereichen des Spalts 4 angeordnet. Dadurch wird die Anzahl der Elektroden und der als Messsignal MS dienenden, erfassbaren Messkapazitäten und damit die Sensitivität der Kondensatoreinheit 8 der kapazitiven Sensorbaugruppe 100 weiter erhöht.

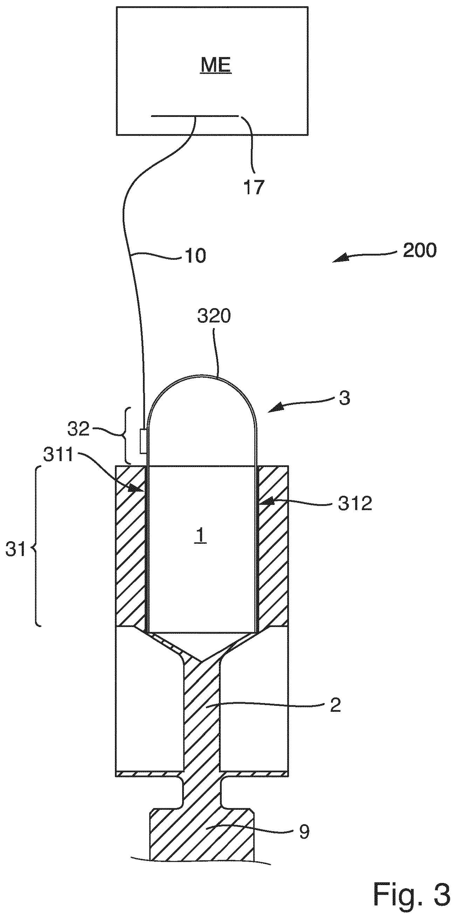

Der erste Spaltabschnitt 311 ist mit dem zweiten Spaltabschnitt 312 mittels eines gebogenen Verbindungsabschnitts 320 aus flexiblen Leiterplattenmaterial gebildet. Dies ist in Fig. 2b in einer um 90° gedrehte Ansicht der bereits in Fig. 2a gezeigten Anordnung dargestellt, hier in einer seitlichen Schnittansicht. Der Verbindungsabschnitts 320 verbindet die beiden Spaltabschnitte 311, 312 außerhalb des Spalts 4 miteinander, indem er sich an einen an den ersten Spaltabschnitt 311 anschließenden flexiblen Anschlussabschnitt 32 anschließt, welcher Anschlussabschnitt 32 aus dem Spalt 4 herausragt. Auf dem Anschlussabschnitt 32 ist ein Anschlusselement 17 angeordnet, bspw. ein Steckverbinderelement, welches zum Anschluss einer Anschlussleitung 10 (vgl. Fig. 3) dient. Ggf. umfasst der Schaltungsträger 3 noch einen sich an den flexiblen Anschlussabschnitt 32 anschließenden starren Abschnitt 33; selbstverständlich kann der Schaltungsträger 3 aber auch als eine vollständig flexible Leiterplatte ausgebildet sein.

Das zweite Gehäuseelement 2 geht an einem dem ersten Gehäuseelement 1 abgewandten Ende in eine Sensorfahne 9 über, so dass die Sensorbaugruppe 100 als ein Sensorelement zum kapazitiven Erfassen von Druckschwankungen einer in dem strömenden Fluid ausgebildeten Kármánschen Wirbelstraße dient und in einem eingangs erwähnten Vortex-Durchflussmessgerät 200 einsetzbar ist.

Dies ist in Fig. 3 dargestellt, welche schematisch ein derartiges Feldgerät 200 zeigt. Die kapazitive Sensorbaugruppe 100 entspricht im Wesentlichen der bereits in Fig. 2b gezeigten Ausgestaltung, nur dass hier der Anschlussabschnitt 32 als vollständig flexibel ausgebildet ist. Die Kondensatoreinheit 8 der Sensorbaugruppe 100 dient also hier als Signalerzeugungseinheit des Feldgeräts 200 zur Erzeugung zumindest eines von einer Prozessgröße abhängigen kapazitiven Messsignals MS. Ferner weist das Feldgerät 200 eine an die Signalerzeugungseinheit mittels einer Anschlussleitung 10 daran angeschlossene Messelektronik ME auf. Die Messelektronik ME dient der Verarbeitung und/oder Weiterleitung des von der Signalerzeugungseinheit erzeugten kapazitiven Messsignals MS. Hierfür umfasst sie selbstverständlich weitere elektronische Bauelemente und/oder Schaltungsanordnungen, wie sie bspw. in aus dem Stand der Technik bekannten Messelektroniken ME (auch: Transmittereinheit) eingesetzt werden, auf welche der Übersichtlichkeit halber hier nicht näher eingegangen wird. Gleiches gilt für weitere Details bezüglich der Ausgestaltung des Vortex-Durchflussmessgeräts, hierbei verweist die Anmelderin auf den eingangs genannten Stand der Technik.

Die paddelförmige Sensorfahne 9 kommt bei einem Betrieb des Feldgeräts 200 mit dem Fluid in Kontakt. Für Anwendung mit hoher Temperatur ist es daher von Vorteil, wenn der Schaltungsträger 3 auf seinem dem Medium zugewandten Ende, insbesondere an dem Spaltabschnitt 31, ausreichend hitzebeständig ist. Dies wird hier dadurch erreicht, dass die flexible Leiterplatte 31 Polyimid als elektrisch isolierende Schicht 7a;7b (und ggf. auch als Trägerelement 19, falls vorhanden) aufweist, welches sich durch eine außerordentlich gute Temperaturbeständigkeit in einem Einsatzbereich von -196°C bis über 300°C auszeichnet. Damit ist die Sensorbaugruppe 100 für einen prozessnahen Einsatz für die vorstehend genannten Heißgasanwendungen der Vortex-Durchflussmessgeräte geeignet. Da nur das dem Schaltungsträger 3 abgewandte Ende der Sensorbaugruppe 100, nämlich die Sensorfahne 9, medienberührend ist, welche von dem Schaltungsträger 3 leicht beabstandet ist, ist ein Einsatz bei Fluidtemperaturen von über 400°C, bspw. bis zu 450° C durchaus möglich, ohne dass ein Kurzschluss zwischen den Elektroden der Kondensatoreinheit 8 verursacht wird, der etwa durch ein völliges Aufschmelzen der elektrisch isolierende Schichten 7a;7b verursacht würde.

Der Spalt 4 ist hier ferner als ein Luftspalt ausgebildet, in den Umgebungsluft ungehindert ein- und ausströmen kann, so dass eine umständliche Evakuierung des Spalts 4 wie sonst bei den Vortex-Durchflussmessgeräte üblich im Rahmen der Erfindung nicht mehr notwendig ist.

Die Bauelemente der Messelektronik ME weisen ggf. eine geringere Temperaturbeständigkeit als der Spaltabschnitt 31 des Schaltungsträgers 3 auf. Daher ist die Messelektronik ME von dem Spaltabschnitt 31 weiter ausreichend beabstandet.

Die Verwendung einer Anschlussleitung 10 ist nicht notwendig, je nach Ausgestaltung können die Leiterelemente 6a;6b bis zur Messelektronik ME fortgesetzt sein, um die Messsignale MS zur erfassen.

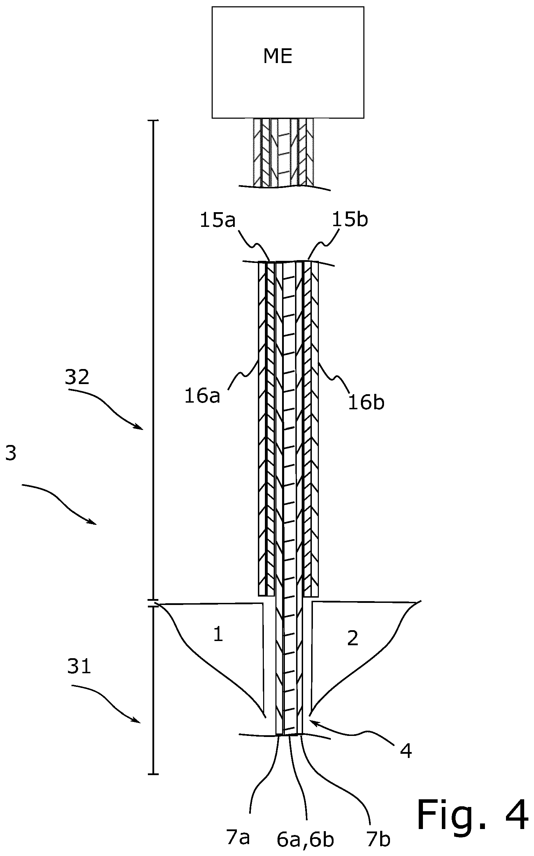

Dies ist in Fig. 4 näher dargestellt, welche einen in den Spalt 4 zwischen den Gehäuseelementen 1, 2 eingesetzten Schaltungsträger 3 zeigt. Der Schaltungsträger 3 umfasst hier den vorstehend erwähnten Spaltabschnitt 31 und geht außerhalb des Spalts 4 in den Anschlussabschnitt 32 über. Der Anschlussabschnitt 32 kann starr-flexibel oder vollständig flexibel sein. Sowohl die Leiterelemente 6a; 6b als auch die die Leiterelemente 6a;6b elektrisch isolierenden Schichten 7a; 7b sind in den Anschlussabschnitt 32 außerhalb des Spalts 4 fortgesetzt. Die fortgesetzten Leiterelemente 6a;6b übernehmen hier die Funktion der Weiterleitung des Messsignals MS an die Messelektronik ME der in Fig. 3 gezeigten Anschlussleitung 10.

Außerhalb des Spalts 4 kann es zu einem störenden Einfluss von elektromagnetischen Störfeldern auf die Leiterelemente 6a,6b kommen, welcher das von der Kondensatoreinheit 8 erfasste und/oder weitergeleitete Messsignal MS verfälscht. Um den Einfluss von elektromagnetischen Störfeldern zu reduzieren, umfasst der Schaltungsträger 3 in dem Anschlussabschnitt 32 ein Abschirmelement. Hierzu umfasst der Schaltungsträger 3 in dem Anschlussabschnitt 32 innenliegende Leitflächenschichten 15a, 15b, die zur Abschirmung etwaiger Störfelder die elektrisch isolierenden Schichten 7a, 7b abdecken. Dies insbesondere vollflächig auf der gesamten Fläche der jeweiligen elektrisch isolierenden Schicht 7a, 7b. Die Leitflächenschichten 15a, 15b sind wiederum jeweils durch eine weitere, insb. auch vollflächige Isolierschicht 16a, 16b abgedeckt. Dies jeweils für jedes in den Anschlussabschnitt 32 fortgesetztes Leiterelement 6a; 6b und jede in den Anschlussabschnitt 32 fortgesetzte, elektrisch isolierende Schicht 7a, 7b. Die Isolierschichten 16a,16b sind insb. auch aus Polyimid. Vorteilhaft ist das Abschirmelement also direkt durch Schichten 15a,15b, 16a, 16b des als semi-flexible oder vollflexible Leiterplatte ausgebildeten Schaltungsträgers 3 gebildet.

### Bezugszeichen und Symbole

- 100: Kapazitive Sensorbaugruppe
- 1: erstes Gehäuseelement
- 11: Außenwandung
- 2: zweites Gehäuseelement
- 21: Innenwandung
- 3: Schaltungsträger
- 31: Spaltabschnitt
- 31a,31b: erste und zweite Oberfläche
- 311,312: erster, zweiter Spaltabschnitt
- 32: Anschlussabschnitt
- 320: Verbindungsabschnitt
- 33: starrer Abschnitt
- 4: Spalt
- 5: Schaltungsanordnung
- 6a,6b: Leiterelemente
- 7a,7b: elektrisch isolierende Schichten
- 8: Kondensatoreinheit
- 9: Sensorfahne
- 10: Anschlussleitung
- 15a,15b: Leitflächenschichten
- 16a,16b: Isolierschichten
- 17: Anschlusselement
- 18: starre Leiterplatte
- 19: Trägerelement
- 200: Feldgerät
- SB: Spaltbreite
- MS: Messsignal
- ME: Messelektronik

## Patentansprüche

1. Kapazitive Sensorbaugruppe (100) für ein Feldgerät der Automatisierungstechnik, welche Sensorbaugruppe umfasst:
ein erstes Gehäuseelement (1) und ein zweites Gehäuseelement (2); und
einen Schaltungsträger (3);
wobei das zweite Gehäuseelement (2) das erste Gehäuseelement (1) zumindest abschnittsweise räumlich derart umgibt, dass ein Spalt (4) zwischen einer Innenwandung (21) des zweiten Gehäuseelements (2) und einer Außenwandung (11) des ersten Gehäuseelements (1) vorliegt,
wobei die Innenwandung (21) des zweiten Gehäuseelements (2) und/oder die Außenwandung (11) des ersten Gehäuseelements (2) elektrisch leitend, insbesondere metallisch, ist; und
wobei der Schaltungsträger (3) zumindest einen in den Spalt (4) hineinragenden Spaltabschnitt (31) mit einer Schaltungsanordnung (5) aufweist,
wobei die Schaltungsanordnung (5) zumindest ein elektrisch leitendes Leiterelement (6a; 6b) mit einer das Leiterelement (6a; 6b) abdeckenden elektrisch isolierenden Schicht (7a;7b) aufweist,
wobei der Spaltabschnitt (31) derart in den Spalt (4) hineinragt, dass eine erste Oberfläche (31a) des Spaltabschnitts (31) der Außenwandung (11) des ersten Gehäuseelements (1) und eine zweite Oberfläche (31b) des Spaltabschnitts (31) der Innenwandung (21) des zweiten Gehäuseelements (2) zugewandt ist,
wobei insbesondere die zweite Oberfläche (31b) des Spaltabschnitts (31) der ersten Oberfläche (31a) des Spaltabschnitts (31) gegenüberliegt;
wobei der Spaltabschnitt (31), welche einer elektrisch leitenden Wandung (11; 21), nämlich der Innenwandung (21) des zweiten Gehäuseelements (2) und/oder der Außenwandung (11) des ersten Gehäuseelements (1) zugewandt ist, die elektrisch isolierende Schicht (7a;7b) aufweist, so dass
zumindest eine erste Elektrode einer Kondensatoreinheit (8) gebildet ist durch das zumindest eine elektrisch leitende Leiterelement (6a; 6b,..) der Schaltungsanordnung (5) des Spaltabschnitts (31),
dass eine oder mehrere zweite Elektrode/n der Kondensatoreinheit (8) gebildet sind durch die dem Spaltabschnitt (31) zugewandte/n elektrisch leitende/n Wandung/en (11,21), nämlich die Innenwandung (21) des zweiten Gehäuseelements (2) und/oder die Außenwandung (11) des ersten Gehäuseelements (1), und
dass das Dielektrikum der Kondensatoreinheit (8) gebildet ist durch das in dem Spalt (4) eingenommene Volumen zwischen dem Spaltabschnitt (31) und der dem Spaltabschnitt (31) zugewandte/n elektrisch leitende/n Wandung, nämlich der die Innenwandung (21) des zweiten Gehäuseelements (2) und/oder die Außenwandung (11) des ersten Gehäuseelements (1), sowie durch einen elektrisch isolierenden Anteil (7,..) des Spaltabschnitts (31).

2. Kapazitive Sensorbaugruppe (100) nach Anspruch 1, wobei sowohl die Innenwandung (21) des zweiten Gehäuseelements (2) als auch die Außenwandung (11) des ersten Gehäuseelements (1) elektrisch leitend, insbesondere metallisch, sind,
und wobei insbesondere sowohl das erstes Gehäuseelement (1) als auch das zweite Gehäuseelement (2) elektrisch leitend, insbesondere metallisch, sind.

3. Kapazitive Sensorbaugruppe (100) nach Anspruch 1 oder 2,
wobei das erste Gehäuseelement (1) und das zweite Gehäuseelement (2) zumindest abschnittsweise zylinderförmig und insbesondere konzentrisch sind,
und
wobei der Spaltabschnitt (31) gekrümmt ist, insbesondere mit einer Krümmung, die an die Kontur des zylinderförmigen Abschnitts des ersten Gehäuseelements (1) und des zweiten Gehäuseelements (2) angepasst ist.

4. Kapazitive Sensorbaugruppe (100) nach zumindest einem der vorherigen Ansprüche, wobei es sich bei dem Schaltungsträger (3) um eine zumindest abschnittsweise flexible Leiterplatte handelt,
und wobei der Spaltabschnitt (31) als zumindest ein flexibler Leiterplattenabschnitt ausgebildet ist.

5. Kapazitive Sensorbaugruppe (100) nach Anspruch 4,
wobei der Spaltabschnitt (31) einen ersten flexiblen Leiterplattenabschnitt (311) und einen zweiten flexiblen Leiterplattenabschnitt (312) umfasst,
und wobei der erste flexible Leiterplattenabschnitt (311) und der zweite flexible Leiterplattenabschnitt (312) an unterschiedlichen Bereichen des Spalts (4) angeordnet sind.

6. Kapazitive Sensorbaugruppe (100) nach zumindest einem der vorherigen Ansprüche 1 bis 3,
wobei es sich bei dem Schaltungsträger (3) um einen anhand eines Verfahren zur Herstellung von dreidimensionalen Spritzgussschaltungsträgern hergestellten Schaltungsträger handelt.

7. Kapazitive Sensorbaugruppe (100) nach zumindest einem der vorherigen Ansprüche, wobei der Spaltabschnitt (31) mit dem ersten Gehäuseelement (1) und dem zweiten Gehäuseelement (2) mechanisch, insbesondere kraftschlüssig, bevorzugt ausschließlich kraftschlüssig, verbunden ist, indem der Spaltabschnitt (31) zwischen das erste Gehäuseelement (1) und das zweite Gehäuseelement (2) in den Spalt (4) eingeklemmt ist.

8. Kapazitive Sensorbaugruppe (100) nach zumindest einem der vorherigen Ansprüche, wobei es sich bei dem Schaltungsträger (3) um eine semi-flexible oder voll-flexible Leiterplatte handelt,
und wobei der Schaltungsträger (3) einen sich an den Spaltabschnitt (31) anschließenden Anschlussabschnitt (32) aufweist, welcher Anschlussabschnitt (32) aus dem Spalt (4) herausragt,
und wobei die zumindest eine elektrisch isolierende Schicht (7a; 7b) der Schaltungsanordnung (5) und das zumindest eine Leiterelement (6a; 6b) der Schaltungsanordnung (5) in dem Anschlussabschnitt (32) fortgesetzt sind.

9. Kapazitive Sensorbaugruppe (100) nach Anspruch 8,
wobei die semi-flexible oder voll-flexible Leiterplatte in dem Anschlussabschnitt (32) ein Abschirmelement aufweist, welches Abschirmelement der Abschirmung von elektromagnetischen Störfeldern dient,
und
wobei das Abschirmelement, umfasst:
- Eine elektrisch leitende Leitflächenschicht (15a;15b), welche Leitflächenschicht (15a;15b) die elektrisch isolierende Schicht (7a; 7b), insb. vollflächig, abdeckt;
- Eine elektrisch isolierende Isolierschicht (16a; 16b), welche Isolierschicht (16a;16b) die Leitflächenschicht (15a; 15b), insb. vollflächig, abdeckt,
wobei die Leitflächenschicht/en (15a, 15b) und die Isolierschicht (16a; 16b) als Schichten der semi-flexiblen oder voll-flexiblen Leiterplatte ausgebildet sind.

10. Kapazitive Sensorbaugruppe (100) nach zumindest einem der vorherigen Ansprüche, wobei es sich bei dem Schaltungsträger (3) um eine, insb. vollständig, flexible Leiterplatte handelt,
wobei auf Anschlussabschnitt (32) ein Anschlusselement (17), insb. ein Steckverbinderelement, angeordnet ist,
wobei insbesondere das Anschlusselement (17) mittels einer elektrischen Durchführung mit einer starren Leiterplatte elektrisch kontaktierbar ist.

11. Kapazitive Sensorbaugruppe (100) nach zumindest einem der vorherigen Ansprüche 8 bis 9,
wobei es sich bei dem Schaltungsträger (3) um eine semiflexible Leiterplatte handelt, und wobei die semiflexible Leiterplatte einen starren Abschnitt (33) umfasst,
und wobei der starre Abschnitt (33) den Anschlussabschnitt (32) umfasst und/oder
wobei der starre Abschnitt (33) sich an den Anschlussabschnitt (32) anschließt.

12. Feldgerät (200) der Automatisierungstechnik zur Erfassung einer Prozessgröße eines Mediums, wobei das Feldgerät (200) eine kapazitive Sensorbaugruppe (100) nach zumindest einem der Ansprüche 1 bis 11 aufweist.

13. Feldgerät (200) nach Anspruch 12, wobei die Kondensatoreinheit (8) als Signalerzeugungseinheit des Feldgeräts (200) dient zur Erzeugung zumindest eines von einer Prozessgröße abhängigen kapazitiven Messsignals (MS),
wobei das Feldgerät (200) eine an die Signalerzeugungseinheit angeschlossene Messelektronik (ME) aufweist, welche der Verarbeitung und/oder Weiterleitung des von der Signalerzeugungseinheit erzeugten kapazitiven Messsignals (MS) dient.

14. Feldgerät (200) nach Anspruch 13,
• wobei das Feldgerät (200) eine starre Leiterplatte (18) umfasst, welche starre Leiterplatte (18) mit dem Anschlusselement (17) mittels einer elektrischen Durchführung (19) elektrisch kontaktiert ist, und wobei die starre Leiterplatte (18) Teil der Messelektronik (ME) ist, oder
• wobei der starre Abschnitt (33) der semi-flexiblen Leiterplatte Teil der Messelektronik (ME) ist.

15. Verwenden eines Feldgeräts (200) nach einem der vorherigen Ansprüche 13 und 14 zum Erfassen eines Strömungsparameters, insb. einer Strömungsgeschwindigkeit und/oder einer Volumen- und/oder Massendurchflussrate, eines in einer Rohrleitung strömenden Fluids mit einer Fluidtemperatur von mehr als 400°C und/oder mit einem Druck von mehr als 250 bar, insb. einem Dampf.

## Claims

1. **Capacitive sensor assembly (100)** for a field device of automation technology, the sensor assembly comprising:
• a first housing element (1) and a second housing element (2); and
• a circuit carrier (3);
wherein the second housing element (2) at least partially spatially surrounds the first housing element (1) such that a gap (4) is provided between an inner wall (21) of the second housing element (2) and an outer wall (11) of the first housing element (1),
wherein the inner wall (21) of the second housing element (2) and/or the outer wall (11) of the first housing element (1) is electrically conductive, in particular metallic; and
wherein the circuit carrier (3) comprises at least one gap section (31) projecting into the gap (4), the gap section having a circuit arrangement (5),
wherein the circuit arrangement (5) comprises at least one electrically conductive conductor element (6a; 6b) having an electrically insulating layer (7a; 7b) covering the conductor element (6a; 6b),
wherein the gap section (31) projects into the gap (4) such that a first surface (31a) of the gap section (31) faces the outer wall (11) of the first housing element (1) and a second surface (31b) of the gap section (31) faces the inner wall (21) of the second housing element (2), wherein, in particular, the second surface (31b) of the gap section (31) is opposite the first surface (31a) of the gap section (31);
wherein the region of the gap section (31) facing an electrically conductive wall (11; 21), namely the inner wall (21) of the second housing element (2) and/or the outer wall (11) of the first housing element (1), comprises the electrically insulating layer (7a; 7b), such that at least one first electrode of a capacitor unit (8) is formed by the at least one electrically conductive conductor element (6a; 6b, ...) of the circuit arrangement (5) of the gap section (31),
wherein one or more second electrode(s) of the capacitor unit (8) are formed by the electrically conductive wall(s) (11, 21) facing the gap section (31), namely the inner wall (21) of the second housing element (2) and/or the outer wall (11) of the first housing element (1), and
wherein the dielectric of the capacitor unit (8) is formed by the volume occupied within the gap (4) between the gap section (31) and the electrically conductive wall facing the gap section, namely the inner wall (21) of the second housing element (2) and/or the outer wall (11) of the first housing element (1), as well as by an electrically insulating portion (7, ...) of the gap section (31).

2. **Capacitive sensor assembly (100)** according to claim 1,
wherein both the inner wall (21) of the second housing element (2) and the outer wall (11) of the first housing element (1) are electrically conductive, in particular metallic,
and wherein, in particular, both the first housing element (1) and the second housing element (2) are electrically conductive, in particular metallic.

3. **Capacitive sensor assembly (100)** according to claim 1 or 2,
wherein the first housing element (1) and the second housing element (2) are at least partially cylindrical and, in particular, concentric,
and wherein the gap section (31) is curved, in particular with a curvature adapted to the contour of the cylindrical section of the first housing element (1) and the second housing element (2).

4. **Capacitive sensor assembly (100)** according to any one of the preceding claims,
wherein the circuit carrier (3) is an at least partially flexible printed circuit board,
and wherein the gap section (31) is formed as at least one flexible printed circuit board section.

5. **Capacitive sensor assembly (100)** according to claim 4,
wherein the gap section (31) comprises a first flexible printed circuit board section (311) and a second flexible printed circuit board section (312),
and wherein the first flexible printed circuit board section (311) and the second flexible printed circuit board section (312) are arranged in different regions of the gap (4).

6. **Capacitive sensor assembly (100)** according to any one of claims 1 to 3,
wherein the circuit carrier (3) is a circuit carrier produced by a process for manufacturing three-dimensional molded interconnect devices (MID).

7. **Capacitive sensor assembly (100)** according to any one of the preceding claims,
wherein the gap section (31) is mechanically connected to the first housing element (1) and the second housing element (2), in particular by frictional engagement, preferably exclusively by frictional engagement,
by the gap section (31) being clamped between the first housing element (1) and the second housing element (2) within the gap (4).

8. **Capacitive sensor assembly (100)** according to any one of the preceding claims,
wherein the circuit carrier (3) is a semi-flexible or fully flexible printed circuit board,
and wherein the circuit carrier (3) comprises a connection section (32) adjoining the gap section (31), the connection section (32) protruding out of the gap (4),
and wherein the at least one electrically insulating layer (7a; 7b) of the circuit arrangement (5) and the at least one conductor element (6a; 6b) of the circuit arrangement (5) continue into the connection section (32).

9. **Capacitive sensor assembly (100)** according to claim 8,
wherein the semi-flexible or fully flexible printed circuit board comprises a shielding element in the connection section (32), the shielding element serving to shield electromagnetic interference fields,
and wherein the shielding element comprises:
• an electrically conductive conductive-area layer (15a; 15b), which conductive-area layer (15a; 15b) covers the electrically insulating layer (7a; 7b), in particular over its entire surface;
• an electrically insulating insulation layer (16a; 16b), which insulation layer (16a; 16b) covers the conductive-area layer (15a; 15b), in particular over its entire surface,
wherein the conductive-area layer(s) (15a; 15b) and the insulation layer(s) (16a; 16b) are formed as layers of the semi-flexible or fully flexible printed circuit board.

10. **Capacitive sensor assembly (100)** according to any one of the preceding claims,
wherein the circuit carrier (3) is a printed circuit board, in particular a fully flexible printed circuit board,
wherein a connection element (17), in particular a connector element, is arranged on the connection section (32),
wherein, in particular, the connection element (17) can be electrically contacted with a rigid printed circuit board by means of an electrical feedthrough.

11. **Capacitive sensor assembly (100)** according to any one of claims 8 to 9,
wherein the circuit carrier (3) is a semi-flexible printed circuit board,
and wherein the semi-flexible printed circuit board comprises a rigid section (33),
and wherein the rigid section (33) comprises the connection section (32) and/or adjoins the connection section (32).

12. **Field device (200)** of automation technology for detecting a process variable of a medium, wherein the field device (200) comprises a capacitive sensor assembly (100) according to any one of claims 1 to 11.

13. **Field device (200)** according to claim 12,
wherein the capacitor unit (8) serves as a signal generation unit of the field device (200) for generating at least one capacitive measurement signal (MS) dependent on a process variable,
wherein the field device (200) comprises measurement electronics (ME) connected to the signal generation unit, the measurement electronics serving for processing and/or forwarding the capacitive measurement signal (MS) generated by the signal generation unit.

14. **Field device (200)** according to claim 13,
• wherein the field device (200) comprises a rigid printed circuit board (18), which rigid printed circuit board (18) is electrically contacted with the connection element (17) by means of an electrical feedthrough (19), and wherein the rigid printed circuit board (18) forms part of the measurement electronics (ME); or
• wherein the rigid section (33) of the semi-flexible printed circuit board forms part of the measurement electronics (ME).

15. **Use of a field device (200)** according to either of claims 13 and 14 for detecting a flow parameter, in particular a flow velocity and/or a volume flow rate and/or mass flow rate, of a fluid flowing in a pipeline,
with a fluid temperature of more than **400°C** and/or a pressure of more than **250 bar**, in particular steam.

## Revendications

1. **Ensemble capteur capacitif (100)** destiné à un appareil de terrain de la technique d'automatisation, l'ensemble capteur comprenant :
• un premier élément de boîtier (1) et un second élément de boîtier (2), et
• un support de circuit (3),
le second élément de boîtier (2) entourant au moins partiellement dans l'espace le premier élément de boîtier (1) de manière à former un interstice (4) entre une paroi intérieure (21) du second élément de boîtier (2) et une paroi extérieure (11) du premier élément de boîtier (1),
la paroi intérieure (21) du second élément de boîtier (2) et/ou la paroi extérieure (11) du premier élément de boîtier (1) étant électriquement conductrice, notamment métallique,
et le support de circuit (3) comportant au moins une section d'interstice (31) s'étendant dans l'interstice (4) et comprenant un agencement de circuit (5),
l'agencement de circuit (5) comprenant au moins un élément conducteur électrique (6a ; 6b) recouvert d'une couche électriquement isolante (7a ; 7b),
la section d'interstice (31) s'étendant dans l'interstice (4) de telle sorte qu'une première surface (31a) de la section d'interstice (31) soit tournée vers la paroi extérieure (11) du premier élément de boîtier (1) et qu'une seconde surface (31b) de la section d'interstice (31) soit tournée vers la paroi intérieure (21) du second élément de boîtier (2),
la seconde surface (31b) de la section d'interstice (31) étant notamment opposée à la première surface (31a) de la section d'interstice (31),
la partie de la section d'interstice (31) faisant face à une paroi conductrice (11 ; 21), à savoir la paroi intérieure (21) du second élément de boîtier (2) et/ou la paroi extérieure (11) du premier élément de boîtier (1), comprenant la couche électriquement isolante (7a ; 7b), de sorte qu'au moins une première électrode d'une unité de condensateur (8) est formée par ledit au moins un élément conducteur électrique (6a ; 6b, ...) de l'agencement de circuit (5) de la section d'interstice (31),
une ou plusieurs secondes électrodes de l'unité de condensateur (8) étant formées par la ou les parois conductrices (11, 21) faisant face à la section d'interstice (31), à savoir la paroi intérieure (21) du second élément de boîtier (2) et/ou la paroi extérieure (11) du premier élément de boîtier (1),
et le diélectrique de l'unité de condensateur (8) étant formé par le volume occupé dans l'interstice (4) entre la section d'interstice (31) et la ou les parois conductrices faisant face à celle-ci, à savoir la paroi intérieure (21) du second élément de boîtier (2) et/ou la paroi extérieure (11) du premier élément de boîtier (1), ainsi que par une partie électriquement isolante (7, ...) de la section d'interstice (31).

2. **Ensemble capteur capacitif (100)** selon la revendication 1,
dans lequel la paroi intérieure (21) du second élément de boîtier (2) et la paroi extérieure (11) du premier élément de boîtier (1) sont toutes deux électriquement conductrices, notamment métalliques,
et dans lequel notamment le premier élément de boîtier (1) et le second élément de boîtier (2) sont tous deux électriquement conducteurs, notamment métalliques.

3. **Ensemble capteur capacitif (100)** selon la revendication 1 ou 2,
dans lequel le premier élément de boîtier (1) et le second élément de boîtier (2) sont au moins partiellement cylindriques et notamment concentriques,
et dans lequel la section d'interstice (31) est courbée, notamment avec une courbure adaptée au contour de la partie cylindrique du premier élément de boîtier (1) et du second élément de boîtier (2).

4. **Ensemble capteur capacitif (100)** selon l'une quelconque des revendications précédentes,
dans lequel le support de circuit (3) est un circuit imprimé au moins partiellement flexible,
et dans lequel la section d'interstice (31) est réalisée sous la forme d'au moins une section de circuit imprimé flexible.

5. **Ensemble capteur capacitif (100)** selon la revendication 4,
dans lequel la section d'interstice (31) comprend une première section de circuit imprimé flexible (311) et une seconde section de circuit imprimé flexible (312),
et dans lequel la première section de circuit imprimé flexible (311) et la seconde section de circuit imprimé flexible (312) sont disposées dans des zones différentes de l'interstice (4).

6. **Ensemble capteur capacitif (100)** selon l'une quelconque des revendications 1 à 3,
dans lequel le support de circuit (3) est un support de circuit réalisé au moyen d'un procédé de fabrication de dispositifs d'interconnexion moulés tridimensionnels (MID).

7. **Ensemble capteur capacitif (100)** selon l'une quelconque des revendications précédentes,
dans lequel la section d'interstice (31) est reliée mécaniquement au premier élément de boîtier (1) et au second élément de boîtier (2), notamment par engagement par friction, de préférence exclusivement par engagement par friction,
la section d'interstice (31) étant serrée dans l'interstice (4) entre le premier élément de boîtier (1) et le second élément de boîtier (2).

8. **Ensemble capteur capacitif (100)** selon l'une quelconque des revendications précédentes,
dans lequel le support de circuit (3) est un circuit imprimé semi-flexible ou entièrement flexible,
et dans lequel le support de circuit (3) comprend une section de raccordement (32) prolongeant la section d'interstice (31), ladite section de raccordement (32) s'étendant hors de l'interstice (4),
et dans lequel ladite au moins une couche électriquement isolante (7a ; 7b) et ledit au moins un élément conducteur (6a ; 6b) de l'agencement de circuit (5) se prolongent dans la section de raccordement (32).

9. **Ensemble capteur capacitif (100)** selon la revendication 8,
dans lequel le circuit imprimé semi-flexible ou entièrement flexible comprend, dans la section de raccordement (32), un élément d'écran destiné à protéger contre les champs parasites électromagnétiques,
ledit élément d'écran comprenant :
• une couche conductrice de surface (15a ; 15b) recouvrant la couche électriquement isolante (7a ; 7b), notamment sur toute sa surface ;
• une couche isolante (16a ; 16b) recouvrant la couche conductrice de surface (15a ; 15b), notamment sur toute sa surface,
les couches conductrices de surface (15a ; 15b) et les couches isolantes (16a ; 16b) étant réalisées sous forme de couches du circuit imprimé semi-flexible ou entièrement flexible.

10. **Ensemble capteur capacitif (100)** selon l'une quelconque des revendications précédentes,
dans lequel le support de circuit (3) est un circuit imprimé, notamment entièrement flexible,
un élément de connexion (17), notamment un connecteur, étant disposé sur la section de raccordement (32),
l'élément de connexion (17) pouvant notamment être mis en contact électrique avec un circuit imprimé rigide au moyen d'un passage électrique.

11. **Ensemble capteur capacitif (100)** selon l'une quelconque des revendications 8 à 9,
dans lequel le support de circuit (3) est un circuit imprimé semi-flexible,
et dans lequel le circuit imprimé semi-flexible comprend une section rigide (33),
la section rigide (33) comprenant la section de raccordement (32) et/ou étant adjacente à celle-ci.

12. **Appareil de terrain (200)** de technique d'automatisation destiné à la détection d'une grandeur de procédé d'un fluide,
l'appareil de terrain (200) comprenant un ensemble capteur capacitif (100) selon l'une quelconque des revendications 1 à 11.

13. **Appareil de terrain (200)** selon la revendication 12,
dans lequel l'unité de condensateur (8) sert d'unité de génération de signal pour produire au moins un signal de mesure capacitif (MS) dépendant d'une grandeur de procédé,
et dans lequel l'appareil de terrain (200) comprend une électronique de mesure (ME) raccordée à l'unité de génération de signal et destinée au traitement et/ou à la transmission du signal de mesure capacitif (MS).

14. **Appareil de terrain (200)** selon la revendication 13,
• dans lequel l'appareil de terrain (200) comprend un circuit imprimé rigide (18) électriquement relié à l'élément de connexion (17) au moyen d'un passage électrique (19), le circuit imprimé rigide (18) faisant partie de l'électronique de mesure (ME) ; ou
• dans lequel la section rigide (33) du circuit imprimé semi-flexible fait partie de l'électronique de mesure (ME).

15. **Utilisation d'un appareil de terrain (200)** selon l'une des revendications 13 et 14 pour détecter un paramètre d'écoulement, notamment une vitesse d'écoulement et/ou un débit volumique et/ou massique, d'un fluide circulant dans une conduite,
le fluide présentant une température supérieure à **400 °C** et/ou une pression supérieure à **250 bar**, notamment de la vapeur.
